# EUROPEAN PATENT APPLICATION

(11) **EP 2 575 044 A1**
(43) Date of publication of application: **03.04.2013**
(21) Application number: 11183536.9
(22) Date of filing: 30.09.2011
(51) Int. Cl.: G06F 9/50

(54) **Method and system of using networked virtual machines of mobile devices in the cloud to provide mobile applications and services**

(71) Applicant: Deutsche Telekom AG, 53113 Bonn (DE); Technische Universität Berlin, 10623 Berlin (DE)
(72) Inventor: Hui, Pan, 10709 Berlin (DE); Kosta, Sokol, 00159 Rome (IT); Xiao, Yu, 00210 Helsinki (FI)
(74) Representative: Vossius & Partner

(57) **Abstract**

The present invention relates to a method and a system of using the networked virtual machines of mobile devices such as smartphones in the cloud to provide mobile applications and services, such as distributed data searching and sharing, collaborative virus scanning, and crowd-sourced traffic monitoring. The system according to the present invention comprises: at least one cloud including a plurality of interconnected virtual machines, wherein each virtual machine being associated with a mobile device hosts a running system image of the mobile device and is adapted to execute tasks requested from the mobile device; at least one distributed file system being data storage for the virtual machines; and at least a networking mechanism which assigns a routable network name to each virtual machine and facilities the communications between virtual machines within or inter clouds.

## Description

### Technical Field

The present invention relates to a method and a system of using the networked virtual machines of mobile devices such as smartphones in the cloud to provide mobile applications and services, such as distributed data searching and sharing, collaborative virus scanning, and crowd-sourced traffic monitoring.

### Background of the invention

There are a number of publications relating to the present invention. In order to simplify the citations in the description, each of these related publications is provided with a respective reference number, and a mapping of the association is provided at the end of this section.

Cloud computing is a paradigm that has been transforming and revolving the IT industry by providing Infrastructure as a Service (IaaS), Platform as a Service (PaaS), and Software as a Service (SaaS). IaaS clouds, such as Amazon Web Services, provide resources like computational capacity and storage to the public in a pay-as-you-go manner. PaaS components, such as Google App Engine, provide platforms on which application developers can build and launch their applications and services. In practice, IaaS clouds can be the underlying infrastructure of PaaS and SaaS clouds. Our invention is related to PaaS and is about a platform on which mobile applications and services can be developed and deployed.

Until February 2011, there have been 5.3 billion mobile subscribers in the world. About 20% of mobile subscribers have had access to fast mobile Internet and are becoming the most active users of Internet services such as Facebook, Twitter and YouTube. On the other hand, smartphones are becoming ever more popular, with current reports suggesting, e.g., 300,000 new Android devices being activated worldwide every month. These devices are equipped with rich sensors, such as camera, light sensors, and GPS receivers. Depending on the equipments available on the phones, they can produce rich amount of content, such as photos, audio, video, GPS status and other sensing information. This content can be used in a variety of Internet services, although currently it is mainly used for social networking and location-based services. With the increasing adoption of high-profile mobile devices (e.g. over 300 million smartphones were sold in year 2010), in the future even more content will be produced by mobile devices. In addition, these devices embedded with multi-radio interfaces can connect to each other through different radio technologies such as WLAN and Bluetooth. This new way of communication opens a door for the mobile devices to become a primary source of data and to collaborate in a peer-to-peer fashion for different distributed services like mobile data searching and collaborative computing. However, for the moment most of these services are still in an infant stage, and below the challenges that arise in the real life are considered.

First, today's mobile devices have a wide range of capabilities, typically including GPS, WiFi, cameras, gigabytes of storage and gigahertz-speed processors. As a result, developers build ever more complex applications for them, supporting activities such as gaming, navigation, video editing, augmented reality, and speech recognition. Unfortunately, as the applications become more complex, and therefore demand more resources, users may often experience even shorter battery lifetimes with the newer hardware.

Offloading computation to more powerful computing systems is a solution to this problem. Virtual machine technology is often used for augmenting the operations of smartphones in the more powerful computing systems like clouds. For example, CloneCloud [1] is a framework for handling the augmented execution of mobile applications in the cloud using a cloned virtual machine (VM) image as a powerful virtual device. This approach leverages the power of virtualization and enables the developers to efficiently partition the applications so that part of the applications can be run remotely without having to run an application server for each required application. MAUI [2] describes a system that enables energy-aware offloading of code to infrastructure. Their main aim is to optimize energy-efficiency of the mobile device, by trading off the energy consumed by local processing with the cost of transmitting the code and the data for remote execution. Paranoid Android [4] uses QEMU to run replica Android images in the cloud in order to enable multiple exploit and attack detection techniques to run simultaneously with minimal impact on phone performance and battery life. The Virtual Smartphone [5] uses the Android x86 port to execute Android images efficiently on VMWare's ESXi virtualization platform. Cloudlets [3, 6] proposes to utilize the nearby resource-rich computer or cluster of computers, to which the smartphone connects over Wi-Fi and access as a thin client. This approach complements the offloading to the cloud infrastructure in the way that the mobile devices can offload computation to either the local or remote computing systems.

Second, although mobile devices are generating rich amount of content, only few of them are available for searching and sharing.

If the mobile-generated content is only stored on the mobile devices, searching and sharing the content in a large-scale network is unfeasible, because the requests have to be sent to each mobile device, which will cause big overhead. An alternative is to upload the content to cloud storage, so the wireless access to the mobile devices will be replaced by the wired access to the cloud storage reducing the overhead of the mobile devices. From the viewpoint of mobile users, cloud storage provides by theory unlimited storage resources. Even for the mobile devices with sufficient local storage, cloud storage can be exploited for backing up the essential data and information. In the cloud, there are also different options. The content can be either stored on the servers owned by each Internet service like YouTube, or in the private storage space belonging to each mobile user. Mobile users choose the way that can bring to them more benefits like lower cost, higher performance and stronger security. Hence, to encourage mobile users to share their content, it is critical to guarantee the security and privacy during data searching and sharing.

**Third,** wireless connectivity such as Bluetooth and Wi-Fi is limited by its short range, or bad stability. The quality of services based on such wireless connectivity cannot be guaranteed.

**Fourth,** the deployment of mobile applications on billions of mobile devices is nontrivial, because the applications are deployed through wireless connections, which have much lower performance compared to the wired connections.

If each phone has its own virtual machine in the cloud, the services based on the community of mobile devices can be also virtualized in the cloud. In that sense, the communications among mobile devices can be implemented as wired networking within the clouds. In addition, the mobile applications can be directly deployed to the virtual machines of the mobile devices through wired connections.

### Related publications

[1] B.-G. Chun, S. Ihm, P. Maniatis, M. Naik, and A. Patti. Clonecloud: Elastic execution between mobile device and cloud. In Proceedings of the 6th European Conference on Computer Systems (EuroSys 2011), April 2011.
[2] E. Cuervo, A. Balasubramanian, D.-k. Cho, A. Wolman, S. Saroiu, R. Chandra, and P. Bahl. MAUI: making smartphones last longer with code offload. In Proceedings of the 8th international conference on Mobile systems, applications, and services(MobiSys'10). ACM, 2010.
[3] M. Satyanarayanan, P. Bahl, R. Caceres, and N. Davies. The case for vm-based cloudlets in mobile computing. IEEE Pervasive Computing, 2009.
[4] G. Portokalidis, P. Homburg, K. Anagnostakis, and H. Bos. Paranoid android: Versatile protection for smartphones. In Proceedings of the 26th Annual Computer Security Applications Conference (ACSAC'10), Austin, Texas, December 2010.
[5] E. Y. Chen and M. Itoh. Virtual smartphone over IP. In Proceedings of the IEEE International Symposium on A World of Wireless, Mobile and Multimedia Networks (WoWMoM'10), pages 1-6, Los Alamitos, CA, USA, June 2010. IEEE Computer Society.
[6] A. Wolbach, J. Harkes, S. Chellappa, and M. Satyanarayanan. Transient customization of mobile computing infrastructure. In Proceedings of the First Workshop on Virtualization in Mobile Computing(MobiVirt'08). ACM, 2008.

### Summary of the invention

As described above, it can be seen that mobile devices are becoming content providers as well service providers in near future. However, it is facing some challenges, such as the limited processing capability, wireless connectivity, battery lifetime, and security/privacy constraints. Offloading computation to the virtual machines of the mobile devices has proved to be effective in saving energy and improving performance for the mobile devices.

The present invention further proposes to connect these virtual machines into networks and to utilize the collective intelligence generated by these virtual machines to develop mobile applications and services.

The present invention is about a service platform. This platform provides services, such as inter-cloud networking, distributed file system and collaborative computing, for application developers to easily develop mobile applications and services based on collaboration among the virtual machines and/or mobile-generate content. In the present invention, the virtual machine of a mobile device is called the *clone* of the mobile device, and the network of the virtual machines is called Clone-to-Clone, C2C, network.

The service platform according to the present invention does not need to own the cloud infrastructure, but it can request resources from public cloud providers and provide the service for those who want to deploy applications and services on the platform. It can be considered as a virtual cloud provider, composed from a network of virtual machines, which can manage its own resources and can guarantee secure and efficient access to the data and information stored on it.

These objects can be archived by features defined in the independent claims. The independent claims provides preferred embodiment of the present invention.

The present invention provides a system of providing a platform for deploying mobile applications and services, comprising: at least one cloud including a plurality of interconnected virtual machines, wherein each virtual machine being associated with a mobile device hosts a running system image of the mobile device and is adapted to execute tasks requested from the mobile device; at least one distributed file system being data storage for the virtual machines; and at least a networking mechanism which assigns a routable network name to each virtual machine and facilities the communications between virtual machines within or inter clouds.

According to another aspect, the present invention also provides a method of providing a platform for deploying mobile applications and services, comprising the steps of: providing at least one cloud including a plurality of interconnected virtual machines, associating each virtual machine with a mobile device and replicating a running system image of the mobile device on the virtual machines and executing tasks requested from the mobile device; providing at least one distributed file system being data storage for the virtual machines; and assigning a routable network name to each virtual machine and facilities the communications between virtual machines.

The distributed file system may be deployed on virtual machines, with the data belonging to each mobile device stored within its associated virtual machine. Alternatively, the distributed file system may be also standalone storage outside of the virtual machine and is accessible for each virtual machines.

The tasks executed on the virtual machine are usually resource intensive, so that these tasks are not necessarily to be executed on the mobile device, thereby saving the computational power of the mobile devices can be saved.

Preferably, each virtual machine allocates a dedicated place from the distributed file system for storing the data of the associated mobile device.

Preferably, the system comprises a security and authentication module to protect the data of the associated mobile device stored on the distributed file system.

Preferably, the system comprises a provisioning module to managing the resources of the system such as computation, storage and networking.

Preferably, the virtual machines are connected to each other through the wired connection of the cloud creating a Clone2Clone network. The virtual machines provides the clones of the mobile devices,

Preferably, the Clone2Clone network is exploited for executing tasks such as content sharing/searching, collaborative tasks, and community sensing among the mobile devices.

Preferably, the system comprises a plurality of clouds and a dynamic migration module to perform a migration of a virtual machine between the plurality of clouds. Preferably, each cloud has one distributed filed system. It is also possible to have only one distributed file system which is shared with the plurality of clouds.

Preferably, the running system image is a phone emulator or a ported operating system of the mobile device.

Preferably, each virtual machine is assigned with a unique IP address. Alternatively, each virtual machine is assigned with the same IP address having unique port number within the same cloud, and wherein the cloud comprise at least one port forwarding proxy for directing network traffic between the mobile devices and the plurality virtual machines.

### Brief description of the figures

The present invention will be hereinafter explained in reference with the exemplary figures.

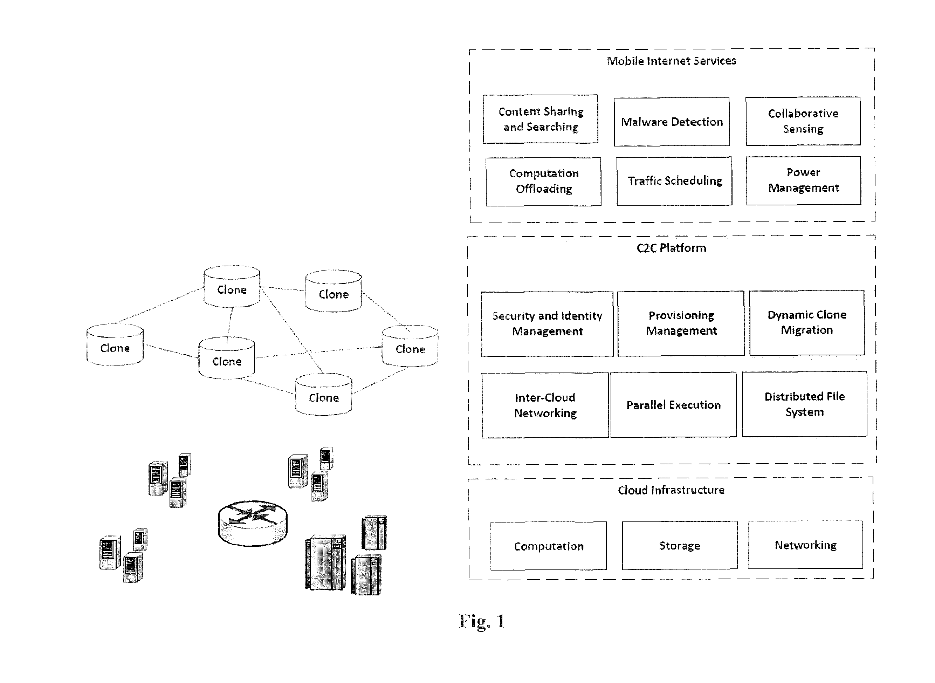

Fig. 1 shows the architecture of this service platform according to the present invention. This platform is deployed on top of a cloud infrastructure. It provides three basic components for the development of mobile applications and services, including inter-cloud networking, parallel execution, and distributed file system. The inter-cloud networking can be further divided into the networking between the clones within the same cloud or across different clouds. This platform also provides three basic services for managing the clones and their networks, including security and identity management, provisioning management, and dynamic clone migration.
Fig. 2 shows the inter-clone and phone-clone networking workflow. It includes three scenarios, the connection between phone and its clone, between two clones within the same cloud, or between two clones in different clouds.
Fig. 3 shows the content searching using the distributed file system provided by the service platform. The content searching follows a peer-to-peer manner.

### Detailed description of the invention

The present invention will be now described in view of several aspects, such as the architecture, service scenarios, the networks of the clones, and the provisioning of the clones.

### I. Architecture

As shown in Fig. 1, clones in the cloud form an inter-cloud network, called C2C network. C2C network runs on top of the cloud infrastructure and provides a platform for third-party service providers to deploy their services on top of clones , e.g. content search, malware detection, power management. In practice, C2C network can allocate resources from one or many public cloud providers, depending on the technical requirement such as QoS guarantee.

On the C2C network, third-party service providers can deploy their services as they do on mobile phones but with higher QoS. The clones augment the full capabilities of the mobile OSs to enable the seamless migration of mobile applications.

The C2C network includes three functional components, namely, parallel execution, distributed file system and inter-cloud networking. They provide the models of computation, storage and networking, respectively.

### a. Computational model

Each clone is a whole-system image of a mobile device such as a smartphone. In practice, the clone can be a mobile OS or a phone emulator, hosted in the cloud. Each mobile device can collaborate with its own clone in running an application together. For example, the mobile devices can offload some resource-intensive tasks to the clones for energy savings. A network of clones can collaborate with each other by sharing their resources and generating collective intelligence. Some existing programming models such as map/reduce can be used for task distribution and result generation.

### b. Storage model

The data generated by mobile devices can be moved to the clones for backup or further use in internet services. The data belonging to different users is separately stored. The storage in the cloud can be scaled up and down automatically or by request, depending on the storage model of the cloud provider. The data can be searched using the searching services provided by the cloud providers, e.g. SQL data services by Microsoft Azure, or using the search functions embedded in the virtual file systems which are built on top of the clone storage.

### c. Networking model

Each clone has a routable network name. It can be a public IP address or a private one, which is routable in the cloud. The network addresses are assigned by the networking services of the cloud providers. A clone can talk to the mobile device that it belongs to through wireless networks. It can communicate with other clones, or other internet clients in the cloud through wired inter-cloud networking. The topology of clones is scalable. Scaling up and down can be automatic and programmer-invisible.

In the C2C network, each clone has its unique owner. To protect the data and information stored in each clone from unauthenticated access, our platform provides a security and identity management service. It controls what to share and who to share in the clone network. Moreover, it restricts which clones may communicate with each other.

To manage the resources of the C2C network, our platform provides a provisioning service, which is responsible for allocating computation, storage and networking capabilities to each clone. The clones are provisioned based on declarative description. For example, a clone can be assigned with an IP address following a declared IP-level topology. The provisioning service collaborates with the resource manager of the cloud provider to scale up/down the computation and storage capabilities of each clone, and to handle the potential network failover.

Due to the mobility of mobile devices, our platform provides dynamic clone migration service. This service allows the migration of an entire OS and all the mobile applications installed in the OS as one unit between clouds. Using this service, the in-memory state can be transferred in a consistent fashion, which means the online services such as streaming can be migrated without any break in the services.

### II. Service scenarios

The C2C network provides a platform for developing various services, such as distributed data searching and sharing, collaborative security control, and location-based community sensing.

### 1. Data searching and sharing

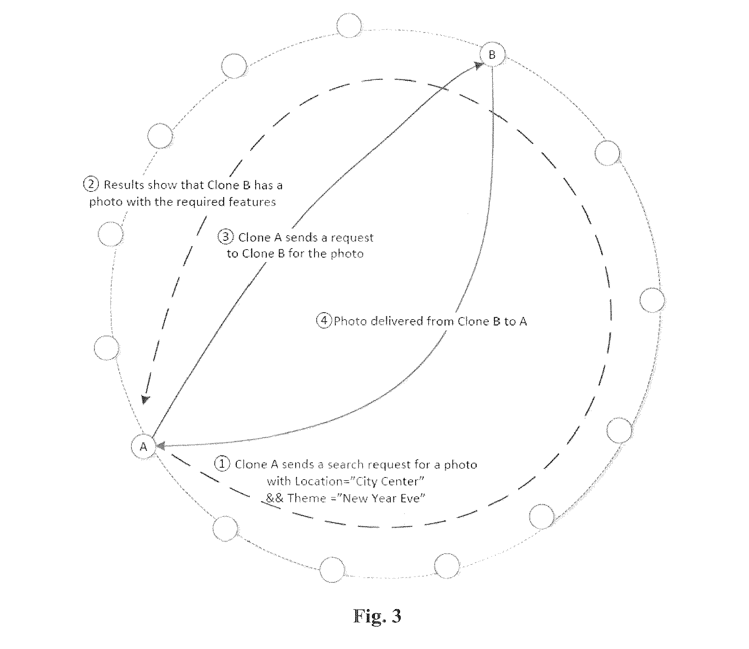

Mobile users store their photos, audios, and videos with location information in their own clones. These photos, audios or videos can be searched based on users interests, like points of interests close to the user, points of interests based on previous user experience etc. Mobile user sends a request to its clone, which will then execute the search on a peer-to-peer fashion, e.g. DHT, and returns the results to the requester. When the requested files are found on another clone, the requester's clone will fetch it directly from that one. Sometimes, the user does not backup all the data in the clone, but just gives the meta-data of the files. In that case, the responder's clone will first fetch the files from the corresponding phone and then forwards it to the requester's clone. The above procedure is described in Fig. 3.

### 2. Collaborative security control

One way for deciding whether a certain program is behaving strangely is to observe the history information of the device where the program is running. However, the information from a single device is very limited, so the solution is to aggregate the history information of many devices. For this scenario we can exploit the C2C network which has large users' devices that can share information. Furthermore, for a particular security task, we can split the operations and traffics into many devices via the C2C, so each real device has little information to collect and transfer to the cloud. In particular, we can have two cases: (1) need data from many devices, e.g., for analysis of a suspected malware, this is obvious that we can leverage C2C to identify what kind of devices can be the targets and some C2C applications on top of the C2C network can collect information from real devices. (2) need massive data from a single device, e.g., for virus scanning. In this case, with the help of some intelligent algorithm the collected data can be split between devices to achieve efficiency. Intuitively, the C2C node may keep and publish some apps that the real device has installed, and then instead of sending all data/binary from a single device to cloud, the C2C can allocate the task with overlapped devices.

### 3. Location-based community sensing

The smartphones can be grouped into a community based on a certain context by implementing an overlay network of their clones in the cloud. For example, users located in the same bar can be grouped into a community, making it possible for users who are interested in the same place to share their experience with each other.

### III. Networks of clones

The present invention chooses mobile phones with the open source Android OS as experimental devices. The clones are implemented in two alternative ways. One is to use the Android emulator to augment the capabilities of the Android OS. This emulator is based on Qemu, which translates ARM instructions into x86 instructions so that they can be executed on the host machine. The emulator can be run on either private or public cloud, e.g. Amazon EC2. The other way is to directly port the Android OS to the x86 platform available on the host machine. Compared with the emulator-based clone, this method gives clones direct access to the low-level hardware resources.

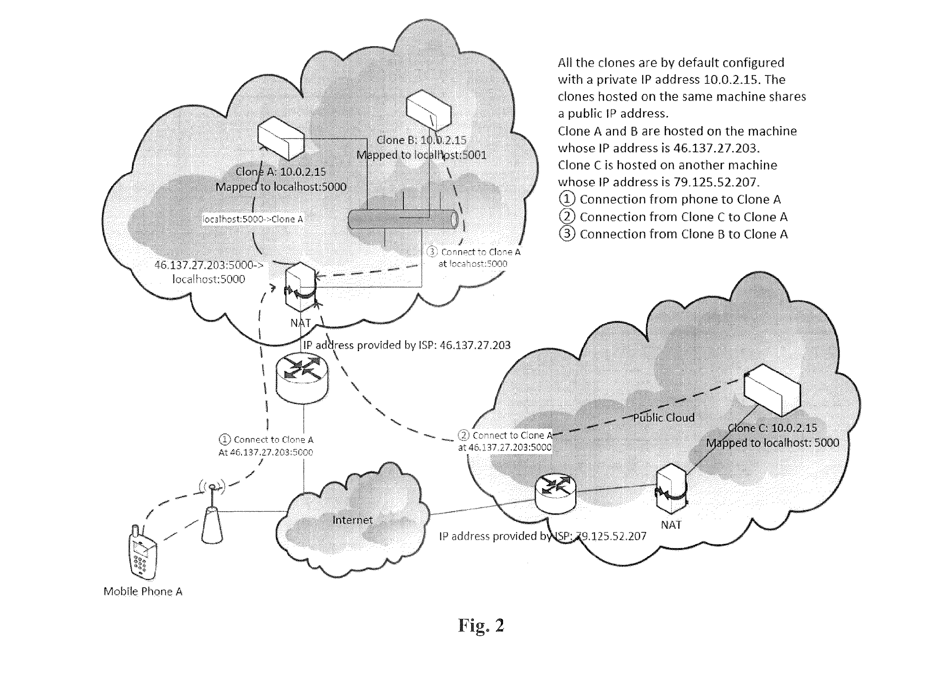

As the clones can be implemented in two different fashions, we implement the networking of clones using two different methods. For the emulator-based clones, all the clones are pre-allocated with the same IP address, 10.0.2.15, due to the default settings of the Android emulator. Hence, the clones are not able to talk to each other directly. For the clones running on the same host machine, we implement the inter-clone communications through a port forwarding proxy. Each clone is mapped to a port on *localhost.* All the traffic to a specific port is redirected to the corresponding clone. As shown in Fig. 2, Clone B can connect to Clone A by sending request to *localhost* at port 5000. All the clones hosted on the same machine share a public IP address. The phone or a clone located in another cloud can send requests to the same public IP address, and the port forwarding proxy will forward the requests to a clone based on the port.

In the other case, when the clones are not based on emulators, they run on top of *Virtual box. Virtualbox* is responsible for the network address management of all the clones. Each clone is assigned a unique address in the same subnet. Hence, the clones can be easily bridged.

To secure the data during transmission, everything is encrypted before sending.

Mobile devices exchange information with clones through wireless networks, such as 3G and Wi-Fi. In addition, we keep a TCP connection between a phone and its clone for synchronization and signalling.

### IV. Provisioning of clones

The C2C network can be scaled up and down when there are clones joining or leaving the network. When a new user wants to join the clone network, the provisioning service will be responsible for creating a new clone for him. When the mobile user is travelling, he/she might want to have a clone closer to his/her new location. In that case, the existing clone will not be deleted but inactivated. Meanwhile, a copy of this clone will be created and deployed in the cloud that is closer to the user. When the user returns to the home location, the previous clone will be activated, and the remote one can be deleted after synchronization with the previous one. When a cloud provider is running out of capacity, the clones can be migrated to another cloud with enough capacity online.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

## Claims

1. System of providing a platform for deploying mobile applications and services, comprising:
at least one cloud including a plurality of interconnected virtual machines, wherein each virtual machine being associated with a mobile device hosts a running system image of the mobile device and is adapted to execute tasks requested from the mobile device;
at least one distributed file system being data storage for the virtual machines; and
at least a networking mechanism which assigns a routable network name to each virtual machine and facilities the communications between virtual machines.

2. System according to any of preceding claims, wherein each virtual machine allocates a dedicated place from the distributed file system for storing the data of the associated mobile device.

3. System according to any of preceding claims, wherein the system comprises a security and authentication module to protect the data of the associated mobile device stored on the distributed file system.

4. System according to any of preceding claims, wherein the system comprises a provisioning module to managing the resources of the system such as computation, storage and networking.

5. System according to any of preceding claims, wherein the virtual machines, called the clones of the mobile devices, are connected to each other through the wired connection of the cloud creating a Clone2Clone network.

6. System according to any of preceding claims, wherein the Clone2Clone network is exploited for executing tasks requested by the mobile device.

7. System according to any of preceding claims, wherein the system comprises a plurality of clouds and a dynamic migration module to perform a migration of a virtual machine between the plurality of clouds.

8. System according to any of preceding claims, wherein the running system image is a phone emulator or a ported operating system of the mobile device.

9. System according to any of preceding claims, wherein each virtual machine is assigned with the same IP address having unique port number within the same cloud, and wherein the cloud comprise at least one port forwarding proxy for directing network traffic between the mobile devices and the plurality virtual machines.

10. Method of providing a platform for deploying mobile applications and services, comprising the steps of:
providing at least one cloud including a plurality of interconnected virtual machines, associating each virtual machine with a mobile device and replicating a running system image of the mobile device on the virtual machines and executing tasks requested from the mobile device;
providing at least one distributed file system being data storage for the virtual machines; and
assigning a routable network name to each virtual machine and facilities the communications between virtual machines.

11. Method according to claim 10, further comprising steps of: managing the resources of the system such as computation, storage and networking by a provisioning module.

12. Method according to any of claims 10 to 11, further comprising steps of: cloning the mobile devices by the virtual machines, and connecting the virtual machines through the wired connection of the cloud creating a Clone2Clone network.

13. Method according to any of claims 10 to 12, further comprising steps of: executing tasks requested by the mobile device within the Clone2Clone.

14. Method according to any of claims 10 to 13, further comprising steps of: performing a to migration of a virtual machine between a plurality of clouds by a dynamic migration module.

15. Method according to any of claims 10 to 14, further comprising steps of: signing a same IP address having unique port number within the same cloud to each virtual machine, and directing network traffic between the mobile devices and the plurality virtual machines by a port forwarding proxy.

## Amended claims

### Amended claims in accordance with Rule 137(2) EPC.

**1.** System of providing a platform for deploying mobile applications and services, comprising:
at least one cloud including a plurality of interconnected virtual machines, wherein each virtual machine being associated with a mobile device hosts a running system image of the mobile device and is adapted to execute tasks requested from the mobile device;
at least one distributed file system being data storage for the virtual machines; and
at least a networking mechanism which assigns a routable network name to each virtual machine and facilitates the communications between virtual machines.

**2.** System according to any of preceding claims, wherein each virtual machine allocates a dedicated place from the distributed file system for storing the data of the associated mobile device.

**3.** System according to any of preceding claims, wherein the system comprises a security and authentication module to protect the data of the associated mobile device stored on the distributed file system.

**4.** System according to any of preceding claims, wherein the system comprises a provisioning module to managing the resources of the system such as computation, storage and networking.

**5.** System according to any of preceding claims, wherein the virtual machines, called the clones of the mobile devices, are connected to each other through the wired connection of the cloud creating Outer Cloud an network.

**6.** System according to any of preceding claims, wherein the Outer Cloud network is exploited for executing tasks requested by the mobile device.

**7.** System according to any of preceding claims, wherein the system comprises a plurality of clouds and a dynamic migration module to perform a migration of a virtual machine between the plurality of clouds.

**8.** System according to any of preceding claims, wherein the running system image is a phone emulator or a ported operating system of the mobile device.

**9.** System according to any of preceding claims, wherein each virtual machine is assigned with the same IP address having unique port number within the same cloud, and wherein the cloud comprise at least one port forwarding proxy for directing network traffic between the mobile devices and the plurality virtual machines.

**10.** Method of providing a platform for deploying mobile applications and services, comprising the steps of:
providing at least one cloud including a plurality of interconnected virtual machines, associating each virtual machine with a mobile device and replicating a running system image of the mobile device on the virtual machines and executing tasks requested from the mobile device;
providing at least one distributed file system being data storage for the virtual machines; and
assigning a routable network name to each virtual machine and facilitates the communications between virtual machines.

**11.** Method according to claim 10, further comprising steps of: managing the resources of the system such as computation, storage and networking by a provisioning module.

**12.** Method according to any of claims 10 to 11, further comprising steps of: cloning the mobile devices by the virtual machines, and connecting the virtual machines through the wired connection of the cloud creating Outer Cloud an network.

**13.** Method according to any of claims 10 to 12, further comprising steps of: executing tasks requested by the mobile device within the Outer Cloud.

**14.** Method according to any of claims 10 to 13, further comprising steps of: performing a to migration of a virtual machine between a plurality of clouds by a dynamic migration module.

**15.** Method according to any of claims 10 to 14, further comprising steps of: signing a same IP address having unique port number within the same cloud to each virtual machine, and directing network traffic between the mobile devices and the plurality virtual machines by a port forwarding proxy.
